# EUROPEAN PATENT SPECIFICATION

(11) **EP 3 086 563 B1**
(45) Date of publication and mention of the grant of the patent: **18.07.2018**
(21) Application number: 14871271.4
(22) Date of filing: 09.04.2014
(51) Int. Cl.: H04L 12/28, H04L 12/66, H04M 11/00

(54) **GATEWAY, MANAGEMENT CENTER, AND REMOTE ACCESS SYSTEM**
GATEWAY, VERWALTUNGSZENTRUM UND FERNZUGANGSSYSTEM
PASSERELLE, CENTRE DE GESTION, ET SYSTÈME D'ACCÈS À DISTANCE

(30) Priority: 16.12.2013 JP 2013259222
(43) Date of publication of application: 26.10.2016
(73) Proprietor: Mitsubishi Electric Corporation, Chiyoda-ku Tokyo 100-8310 (JP)
(72) Inventor: TAKADA, Yoshinori, Tokyo 100-8310 (JP)
(74) Representative: Pfenning, Meinig & Partner mbB
(86) International application number: PCT/JP2014/060331
(87) International publication number: WO 2015/093070

(56) References cited:
- JP-A- 2006 203 518
- JP-A- 2013 090 141
- JP-A- 2013 097 599
- JP-A- 2013 097 599
- JP-A- 2013 246 609
- US-A1- 2005 197 989

## Description

### Field

The present invention relates to a gateway, a management center, and a remote access system.

### Background

Various types of appliances operate while connected to networks today owing to inexpensive and small communication devices realized by the advancement of network technology. Many of the electric appliances installed in homes are also provided with a communication function to operate, not on a standalone basis, but in coordination with information from outside the appliance due to widespread use of the Internet. There is an in-home control system, referred to as a smart house, available at present, which provides a user with a comfortable living environment while curbing energy consumption by controlling all the electric appliances in the home in a coordinated fashion. In such a smart house, a home electrical appliance in the house is connected to a home network to operate in coordination with other appliances. With widespread use of broadband connection in a home, it will be possible to create a more functional and efficient system by coordinating appliances connected to a home network with an external system via the Internet than those created by achieving control only with information from the appliances in the home.

For example, to feed reservation information to a digital recorder in a home from an external system, the digital recorder is connected via a home network to a public network and then to a server that manages the reservation of the digital recorder. A user inputs the reservation information to the server, and the digital recorder can make access to the server to obtain the reservation information. By this series of operations, the function of reserving a program from a remote location is achieved. In this manner, home electrical appliances connected to a home network can be controlled from an external system via the Internet.

Furthermore, as is called the Internet of Things (IoT), smaller and single-function devices are also connected to a network in addition to the appliances having high-level functionalities such as home electrical appliances. In a home, its internal status can be comprehensively grasped from information, such as air temperature, intensity of illumination, and human presence, obtained from sensor devices installed in the home.

By combining the above described techniques, a system can be established in which home electrical appliances in a home are controlled from an external system connected via the Internet on the basis of the status in the home. For example, it will be possible to change the operation status of an air conditioner on the basis of thermometers installed at more than one location in a home, not just one location where the air conditioner is installed. Additionally, by detecting a person by a human presence sensor, the ON/OFF state of a home electrical appliance can be included in the conditions to change the operation status; home automation with more complex and advanced control can be achieved.

As a home automation system controllable on the basis of complex conditions becomes widespread, the amount of information increases concerning state transition functions to manage the control states of home appliances and concerning conditions that serve as triggers for the state transitions. Hence, these control conditions and setting information relating to operations when the conditions are satisfied and control state information of the home appliances are managed, not in the home, but by an external system. To control an appliance in the home from the external system, sensor information in the home is transferred to the external system via a gateway that connects the inside and the outside of the home, and the external system transfers a control-instructing message, which has been determined necessary on the basis of the sensor information, via the gateway to the inside of the home to control the home electrical appliance.

In the case of communication among appliances in a home, distances among target appliances are short, and time required for transferring the sensor information and control-instructing messages are short. Thus, a period of time between an occurrence of an event serving as a trigger for controlling a home appliance and completion of the control of the home appliance becomes short. Therefore, the home automation system is stably operable. In comparison, in the case of controlling a home appliance in a home from an external system, the period of time to transfer data through a communication channel between the house and a cloud varies in accordance with the state of a public network, and thus, the performance of the system varies depending on the state of the public network. In a home automation system, there is a control that requires stringent conditions in terms of time between the occurrence of an event and the completion of the control of a home appliance, however there is another control that requires comparatively less stringent time constraints.

For example, in the case of controlling lighting to turn it ON/OFF in response to a human presence sensor in a home, the lighting should be turned ON within a certain period of time from the occurrence of an event; if turning ON the lighting takes the certain period of time or longer, a user to whom the human presence sensor has responded could have left the location already. In contrast, in the case of controlling an air conditioner on the basis of information from a temperature sensor, there is inherently a time lag between the start of the control and the air conditioning takes effect, and thus, the constraint on the time before the control starts is relatively lax. As described above, different control targets involve different allowable length of times between the occurrence of an event and the completion of control; thus, handling control processing is performed in a discriminating manner in accordance with contents to be controlled and thus a high priority is given to controlling an application with a greater time constraint. Therefore, both of an application with a great time constraint and an application with a less time constraint can be satisfied.

As a system that controls a home appliance remotely, Patent Literature 1 below discloses a technique whose functions included in a management center are downloaded in accordance with frequency of use and priority for each application to a virtualized home gateway to change the implementation position of the functions. The management center and the virtualized home gateway are connected via a wide area network, a control command issued by a home electrical appliance in a home network is transferred via the virtualized gateway to the management center. The management center receives the control command from the virtualized home gateway and performs corresponding home appliance control on the home network. Here, the management center changes the implementation position of the functions of a control application program that corresponds to a control target appliance to the virtualized home gateway to reduce the time period taken for the communication between the management center and the home network and thereby improves the responsiveness for the control on the home network. Patent Literature 2 deals with an in-home network system that is capable of smoothly controlling an appliance under several circumstances.

### Citation List

### Patent Literature

Patent Literature 1: Japanese Patent Application Laid-Open No. 2013-97599
Patent Literature 2: US 2005/197989 A1

### Summary

### Technical Problem

In the conventional technique, the whole application is operated on the virtual home gateway, and complex and large-scale control to be achieved by the application program leads to an increase in scale of the application program. To execute such an application program equivalent to that of the external system, the virtual home gateway is required to provide a throughput and memory capacity equivalent to those in the external system. There is a problem that control that is based on complex conditions cannot be achieved by the virtual home gateway, which does not have a throughput and memory capacity equivalent to those of the external system, and thus cannot be applicable to a system having above described configuration.

The present invention has been achieved in view of the above and an object of the present invention is to obtain a gateway capable of improving the responsiveness of control on an appliance, achievable with a small computer resource, and capable of improving responsiveness, in a remote access system in which an appliance connected to a home network is controlled from the outside.

### Solution to Problem

To solve the above described problems and achieve the object, a remote access system of the present invention includes: a gateway that connects a public network and a home network; and a management center that controls, via the public network, an appliance connected to the home network. The gateway according to the present invention includes: a sensor information collection unit that collects state information of a sensor connected to the home network; a management center coordination unit that transfers the state information to the management center and obtains simplified rule information from the management center, the simplified rule information being a part of a control rule that is defined in the management center and includes a plurality of conditions to control the appliance; a simplified rule database that manages the simplified rule information; and an appliance control unit that controls the appliance on a basis of the simplified rule information and the state information. The gateway receives authority to control the appliance by obtaining the simplified rule information from the management center, wherein a simplified rule is a part of the control rule where at least one of the plurality of conditions of the control rule is determined to match data in a sensor state database of the management center.

### Advantageous Effects of Invention

The gateway, the management center, and the remote access system according to the present invention produce an effect of being able to improve the responsiveness of control on an appliance in the remote access system in which the appliance connected to a home network is controlled from the outside.

### Brief Description of Drawings

FIG. 1 is a diagram illustrating an exemplary configuration of a remote access system.
FIG. 2 is a diagram illustrating an exemplary configuration of a management center.
FIG. 3 is a diagram illustrating an exemplary configuration of a home gateway.
FIG. 4 is a diagram illustrating an exemplary configuration of a control rule database.
FIG. 5 is a diagram illustrating an exemplary construction of a sensor state database.
FIG. 6 is a diagram illustrating an exemplary configuration of a home appliance state database.
FIG. 7 is a diagram illustrating an exemplary configuration of a sensor database.
FIG. 8 is a diagram illustrating an exemplary configuration of a home appliance database.
FIG. 9 is a diagram illustrating an exemplary configuration of a simplified rule database.
FIG. 10 is a diagram illustrating a specific example setting of the control rule database.
FIG. 11 is a sequence diagram illustrating actions in the remote access system.
FIG. 12 is a flowchart illustrating the processing of simplified-rule setting condition agreement detection to be performed in the management center.
FIG. 13 is a diagram illustrating a specific example setting of the simplified rule database.
FIG. 14 is a diagram illustrating an exemplary configuration of a control rule database in a second embodiment.

### Description of Embodiments

Exemplary embodiments of a gateway according to the present invention will now be described in detail with reference to the drawings. The present invention is not limited to the embodiments.

### First embodiment

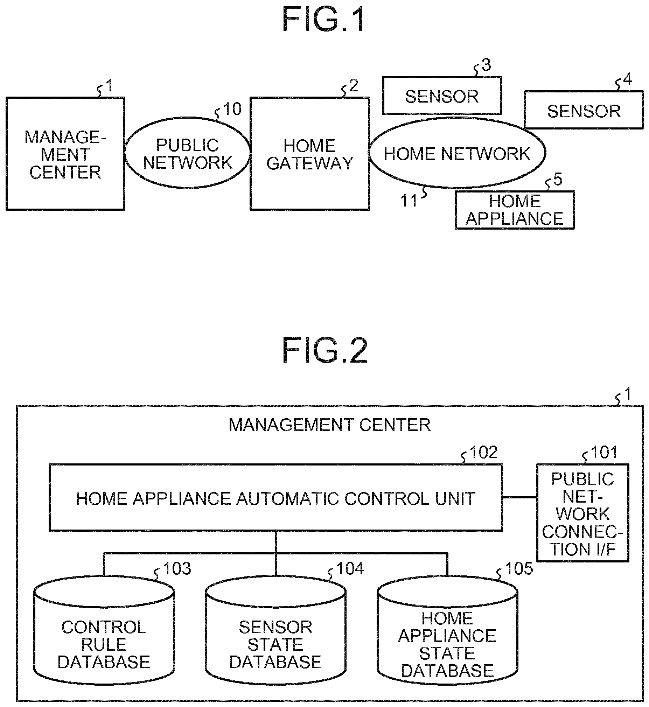

FIG. 1 is a diagram illustrating an exemplary configuration of a remote access system. The remote access system includes a management center 1, a home gateway 2, sensors 3 and 4, and a home appliance 5. The home gateway 2, which is a gateway that connects a public network 10 and a home network 11, is connected to the management center 1 via the public network 10, and is connected to the sensors 3 and 4 and the home appliance 5 present in a home via the home network 11. In the remote access system illustrated in FIG. 1, the home gateway 2 collects the state information of the sensors 3 and 4 and the home appliance 5 in the home via the home network 11 and notifies the management center 1 of the collected state information via the public network 10. Upon notification of the state information of the sensors 3 and 4 and the home appliance 5 in the home, the management center 1 becomes capable of controlling the home appliance. Although two sensors and one home appliance are connected to the home network 11 in the remote access system in FIG. 1, this is an example; three or more sensors and two or more home appliances can be connected. Moreover, a home appliance (the home appliance 5) is to be controlled in the present embodiment, but this is not a limitation; any appliance, not necessarily a home appliance, may be controlled.

FIG. 2 is a diagram illustrating an exemplary configuration of the management center 1. The management center 1 includes a public network connection I/F 101 for connecting itself to the public network 10; a home appliance automatic control unit 102 for achieving automatic control on the home appliance 5; a control rule database 103 that defines a control rule for prescribing an action of the automatic control on the home appliance; a sensor state database 104 that manages the states of the sensors 3 and 4 present in the home; and a home appliance state database 105 that manages the state of the home appliance 5 present in the home. The home appliance automatic control unit 102 manages the control rule database 103, the sensor state database 104, and the home appliance state database 105.

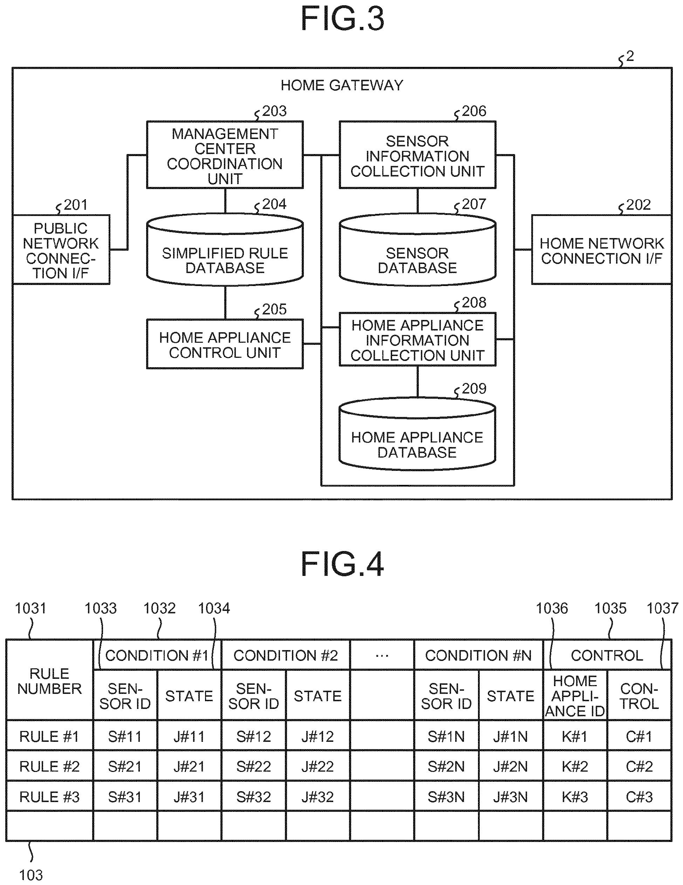

FIG. 3 is a diagram illustrating an exemplary configuration of the home gateway 2. The home gateway 2 includes a public network connection I/F 201 for connecting itself to the public network 10; a home network connection I/F 202 for connecting itself to the home network 11; a management center coordination unit 203 that notifies the management center 1 of state information, i.e., sensor information and home appliance information; a simplified rule database 204 that stores and manages simplified rule information notified by the management center 1; a home appliance control unit 205 that controls the home appliance 5 present in the home on the basis of simplified rule information in the simplified rule database 204; a sensor information collection unit 206 that collects the state information (sensor information) from the sensors 3 and 4 in the home via the home network 11; a sensor database 207 for managing which sensor is present in the home; a home appliance information collection unit 208 that collects the state information (home appliance information) from the home appliance 5 in the home; and a home appliance database 209 for managing which home appliance is present in the home. The sensor information collection unit 206 manages the sensor database 207. The home appliance information collection unit 208 manages the home appliance database 209.

FIG. 4 is a diagram illustrating an exemplary configuration of the control rule database 103 implemented in the management center 1. The control rule database 103 is defined as a set of a plurality of control rule entries. Each rule entry is a database that includes: items of a rule number 1031 being identification information of a control rule; items of a plurality of conditions 1032 that represent control conditions of the rule; and items of control 1035 that prescribe an operation to be performed when the conditions are satisfied. The condition 1032 includes: a sensor ID 1033 that designates a sensor in the home; and a state 1034 that represents the state of the sensor designated by the sensor ID 1033. The control 1035 includes: a home appliance ID 1036 that identifies a target home appliance to be controlled when all the conditions set in the conditions 1032 for an identical rule number are satisfied; and control 1037, which is to be performed on the home appliance identified by the home appliance ID 1036. In FIG. 4, N conditions can be set for one control rule at the maximum, however this is an example; the number of conditions may be less than N.

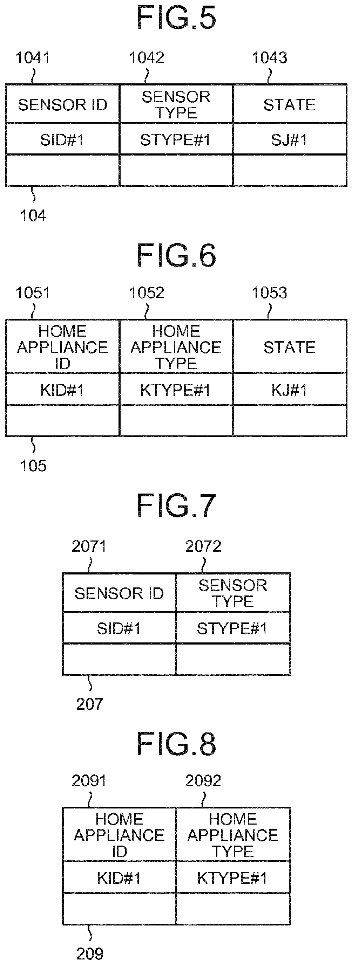

FIG. 5 is a diagram illustrating an exemplary construction of the sensor state database 104 implemented in the management center 1. The sensor state database 104 is a database that includes: items of a sensor ID 1041 being an identifier for identifying an individual sensor; items of a sensor type 1042 that indicates the type of the sensor of the sensor ID 1041; and items of a state 1043 that indicate the present state of the sensor of the sensor ID 1041, i.e., the sensor information.

FIG. 6 is a diagram illustrating an exemplary configuration of the home appliance state database 105 implemented in the management center 1. The home appliance state database 105 is a database that includes: items of a home appliance ID 1051 being an identifier for identifying an individual home appliance; items of a home appliance type 1052 that indicates the type of the home appliance of the home appliance ID 1051; and items of a state 1053 that indicate the state of the home appliance of the home appliance ID 1051.

FIG. 7 is a diagram illustrating an exemplary configuration of the sensor database 207 implemented in the home gateway 2. The sensor database 207 is a database for managing sensors present in the home where the home gateway 2 is installed. The sensor database 207 includes: items of a sensor ID 2071 being an identifier that identifies an individual sensor; and items of a sensor type 2072 being the type of the sensor identified by the sensor ID 2071.

FIG. 8 is a diagram illustrating an exemplary configuration of the home appliance database 209 implemented in the home gateway 2. The home appliance database 209 is a database for managing a home appliance present in the home provided with the home gateway 2. The home appliance database 209 includes: items of a home appliance ID 2091 being an identifier that identifies an individual home appliance; and items of a home appliance type 2092 being the type of the home appliance identified by the home appliance ID 2091.

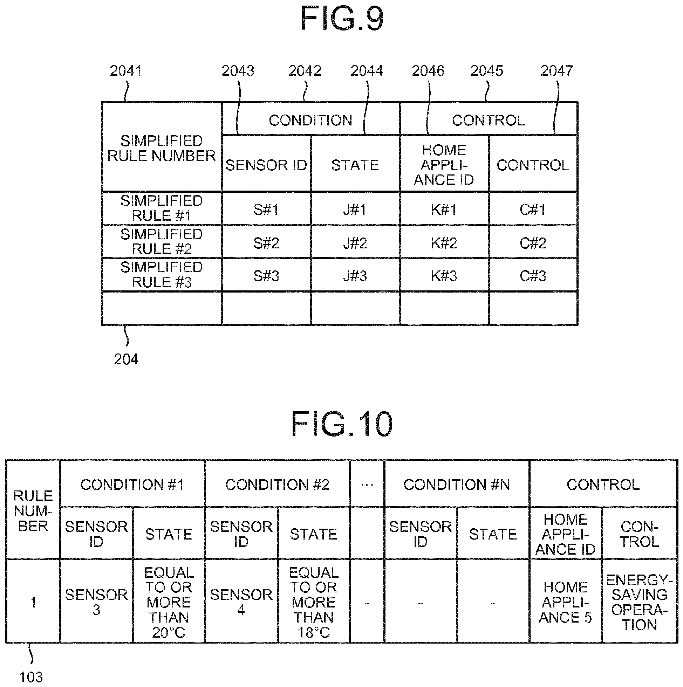

FIG. 9 is a diagram illustrating an exemplary configuration of the simplified rule database 204 implemented in the home gateway 2. A simplified rule number 2041 is assigned to each rule to identify a corresponding simplified rule. In the simplified rule database 204, only one condition 2042 can be set for each rule; the condition 2042 includes a sensor ID 2043 that identifies a sensor; and a state 2044 that indicates the state of the sensor designated by the sensor ID 2043. Also in the simplified rule database 204, control to be performed when the condition 2042 is satisfied is set in control 2045. The control 2045 includes a home appliance ID 2046 that indicates a home appliance to be controlled, and control 2047 that indicates the control to be performed on the home appliance identified by the home appliance ID 2046.

With respect to the state information of the sensors 3 and 4 and the home appliance 5 in home network 11: the sensor information collection unit 206 implemented in the home gateway 2 collects the state information (sensor information) of the sensors 3 and 4 via the home network connection I/F 202; and the home appliance information collection unit 208 implemented in the home gateway 2 collects the state information (home appliance information) of the home appliance 5 via the home network connection I/F 202. The management center coordination unit 203 transfers the state information of the sensors 3 and 4 collected by the sensor information collection unit 206 and the state information of the home appliance 5 collected by the home appliance information collection unit 208 to the management center 1 via the public network connection I/F 201.

In the management center 1, the home appliance automatic control unit 102 receives the state information transferred from the management center coordination unit 203 in the home gateway 2 via the public network connection I/F 101; and stores the state information (sensor information) on the sensors 3 and 4 in the sensor state database 104; and stores the state information (home appliance information) on the home appliance 5 in the home appliance state database 105.

Coordination actions between the management center 1 and the home gateway 2 in relation to the present embodiment will now be described.

FIG. 10 is a diagram illustrating a specific example setting for the control rule database 103 in the management center 1 according to the present embodiment. This example indicates a state that defines a control rule that, when two conditions, "the sensor information of the sensor 3 is a temperature equal to or more than 20°C" and "the sensor information of the sensor 4 is a temperature equal to or more than 18°C," are satisfied, "the home appliance 5 is switched to an energy-saving operation mode." Here, it is assumed that both of the sensor 3 and the sensor 4 are temperature sensors and that the home appliance 5 is an air conditioner capable of operating in an energy-saving mode. Under such a setting, the home gateway 2 collects the sensor information periodically from each of the sensors 3 and 4.

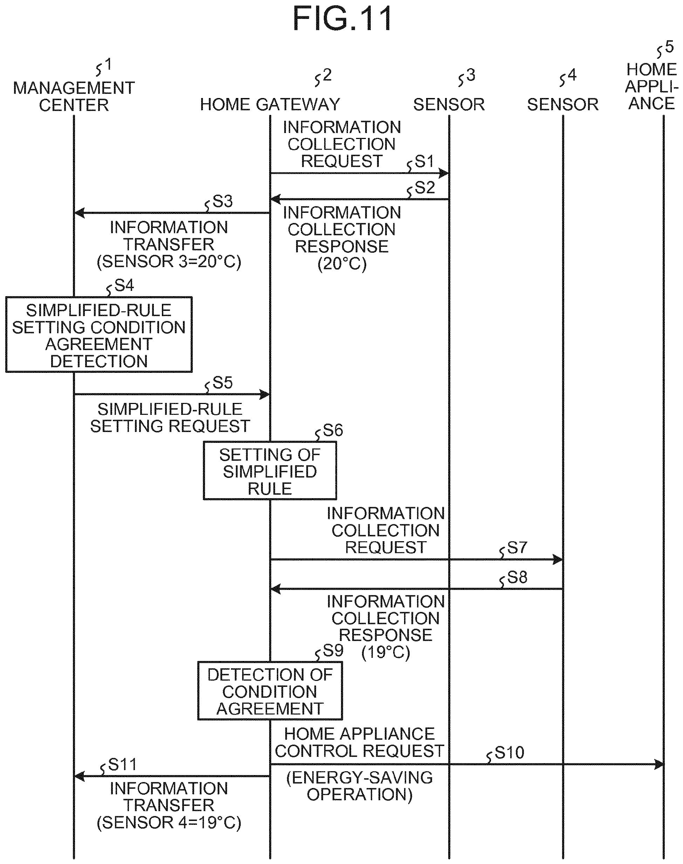

FIG. 11 is a sequence diagram illustrating actions in the remote access system in which the control rule database 103 as illustrated in FIG. 10 is set in the management center 1. Here, the home gateway 2 collects the sensor information from the sensor 3 and the sensor 4 periodically. The home gateway 2 notifies the management center 1 of the collected sensor information (state information) so that the management center 1 can collect and store the sensor information (state information) of the sensors 3 and 4.

With reference to the sequence in FIG. 11, in the home gateway 2, the sensor information collection unit 206 submits an information collection request to the sensor 3 to collect the information (step S1). The sensor 3 being a temperature sensor, performs an information collection response in response to the information collection request and notifies the home gateway 2 of the sensor information of 20°C (step S2). Upon collection by the sensor information collection unit 206 of the sensor information of 20°C from the sensor 3, the management center coordination unit 203 simply transfers the collected sensor information to the management center 1 because no simplified rule is set at this point of time in the home gateway 2 (step S3).

Upon receipt of the sensor information of the sensor 3 in the management center 1, the home appliance automatic control unit 102 updates the sensor state database 104 on the basis of the received sensor information of the sensor 3. After the update of the sensor state database 104, the home appliance automatic control unit 102 in the management center 1 performs simplified-rule setting condition agreement detection based on the contents stored in the sensor state database 104 and the contents stored in the control rule database 103 (step S4). In the management center 1, the home appliance automatic control unit 102 checks, among the rules presently set in the control rule database 103, for any rule that satisfies information that is set based on the contents of the sensor state database 104 as the simplified-rule setting condition agreement detection; and detects a rule having such matched conditions, the number of which is "the number of set conditions - 1" such that all the conditions will be satisfied when there is a match for the remaining one condition among the conditions being set.

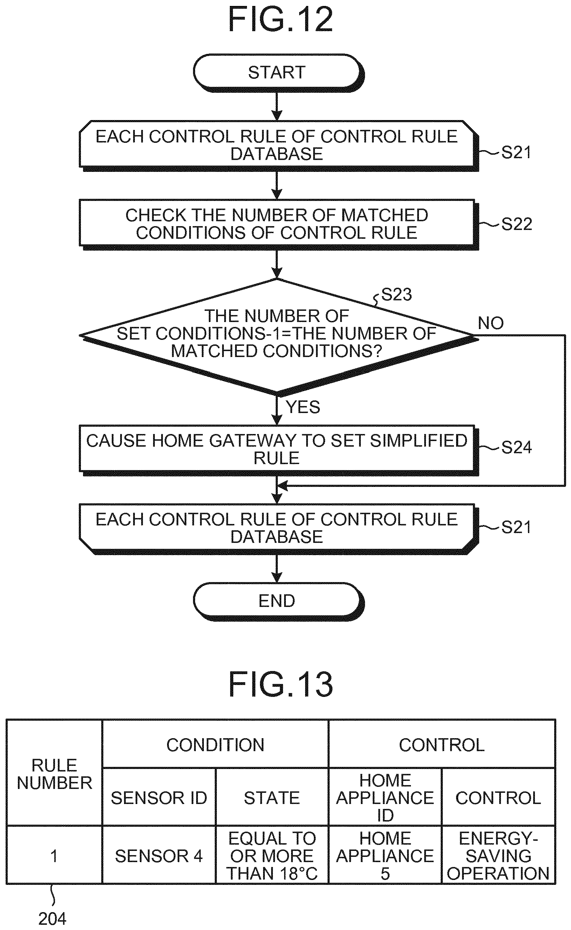

FIG. 12 is a flowchart illustrating the processing of the simplified-rule setting condition agreement detection to be performed in the management center 1 after the update of the sensor state database 104. The home appliance automatic control unit 102 checks, targeting each control rule of the control rule database 103, for contents in the sensor state database 104 (step S21). Specifically, the home appliance automatic control unit 102 checks the conditions of a control rule in the control rule database 103 to determine the number of conditions that match data in the sensor state database 104 (step S22). If the check of the conditions of the target control rule against the data in the sensor state database 104 reveals that the number of matched conditions is not the number of conditions set for the control rule minus one, i.e., "the number of set conditions - 1" (step S23: No); the home appliance automatic control unit 102 determines that the next control rule in the control rule database 103 be the target control rule and checks the conditions of a control rule to determine the number of conditions that match data in the sensor state database 104 (step S22). If the check of the conditions of the target control rule against the data in the sensor state database 104 reveals that the number of matched conditions is the number of conditions set for the control rule minus one, i.e., "the number of set conditions - 1" (step S23: Yes), the home appliance automatic control unit 102 determines that a simplified rule be set in the home gateway 2 (step S24). When all the control rules in the control rule database 103 are checked against the contents in the sensor state database 104 (step S21), the home appliance automatic control unit 102 finishes the processing of the simplified-rule setting condition agreement detection.

The flowchart in FIG. 11 will be described again. In the management center 1, when the control rule database 103 illustrated in FIG. 10 is set, and the sensor information of 20°C for the sensor 3 is collected from the information transfer in step S3, the home appliance automatic control unit 102 determines that a condition #1 of a rule number 1 is satisfied. In the management center 1, the number of conditions set for the rule number 1 is two, and the number of conditions that do not match is remaining one from "2 - 1 = 1"; this satisfies the simplified-rule setting condition.

When the satisfaction of the simplified-rule setting condition is detected, the home appliance automatic control unit 102 in the management center 1 submits a simplified-rule setting request so that a corresponding simplified rule is set in the home gateway 2 (step S5). The simplified-rule setting request submitted by the management center 1 includes simplified rule information that includes the remaining one condition and the control of the relevant rule that are determined by the simplified-rule setting condition agreement detection.

In the home gateway 2, the management center coordination unit 203 sets the data contained in the received simplified-rule setting request (simplified rule information) in the simplified rule database 204 (step S6). FIG. 13 is a diagram illustrating a specific example setting of the simplified rule database 204 implemented in the home gateway 2, after the setting of the simplified rule. In comparison with the control rule database 103 as illustrated in FIG. 10, in the simplified rule database 204 of FIG.13, only the remaining one condition with no match (a condition #2 in FIG. 10) and the control are set for the rule number.

In the home gateway 2, the periodic collection of information from each sensor is continued after the setting of the simplified rule. The sensor information collection unit 206 in the home gateway 2 submits an information collection request to the sensor 4 to collect information (step S7). The sensor 4 as a temperature sensor, performs an information collection response in response to the information collection request and notifies the home gateway 2 of the sensor information of 19°C (step S8).

Here, upon collection of the sensor information of 19°C from the sensor 4 by the sensor information collection unit 206, the home appliance control unit 205 in the home gateway 2 checks the simplified rule database 204, since a simplified rule is set at this point of time, to determine whether the collected sensor information matches the condition set in the simplified rule information (step S9). In the home gateway 2, when the home appliance control unit 205 checks the simplified rule database 204 illustrated in FIG. 13; if the sensor information collected from the sensor 4 is 19°C which means it matches a condition #1 set in the simplified rule, and thus the condition of the simplified rule is satisfied. Consequently, the home appliance control unit 205 in the home gateway 2 submits a home appliance control request to the home appliance 5 according to the control in the simplified rule to issue a mode change instruction to the energy-saving operation mode (step S10). The management center coordination unit 203 in the home gateway 2 transfers the temperature information collected from the sensor 4 to the management center 1 as in the case with the sensor 3 in order to update the sensor state database 104 in the management center 1 (step S11).

The home gateway 2 that has collected temperature information of the sensor 4 can recognize a condition of a control rule in the home appliance automatic control matches, before transferring the information to the management center 1, thus it becomes possible to control the home appliance 5 from the home gateway 2. Hence, the time necessary for the transfer of information from the home gateway 2 to the management center 1, the transfer of a control request from the management center 1 to the home gateway 2, and the detection of agreement of a condition in the management center 1 can be reduced.

As described above, in the remote access system including the management center 1 and the home gateway 2 according to the present embodiment: the home gateway 2 collects the sensor information from the sensors 3 and 4 connected to the home network 11 and transfers the information to the management center 1; the management center 1 causes the home gateway 2 to set a simplified rule if the number of matched conditions is "the number of set conditions - 1" on the basis of a control rule in the control rule database 103 and the sensor information in the sensor state database 104; and the management center 1 delegates the authority to control the home appliance 5 to the home gateway 2, such that the home gateway 2 performs control on the home appliance 5 under the delegated authority if sensor information satisfies a condition in the simplified rule. Thus, it becomes possible to reduce time before starting the control on the home appliance 5 by the time required for transfer between the management center 1 and the home gateway 2, and thereby responsiveness is improved.

Additionally, since the amount of information of a simplified rule set by the management center 1 is small, the throughput capacity of the home appliance control unit 205 and the memory capacity of the simplified rule database 204 may remain small; thus, the home gateway 2 is not required to have a throughput and memory capacity equivalent to those of the management center 1 and can be achieved with a simple configuration.

Note that the condition for the management center 1 to cause the home gateway 2 to set a simplified rule is whether conditions in a control rule of the control rule database 103 match sensor information, the number of which is "the number of set conditions - 1," however this is merely an example , but not a limitation. In the case of many conditions in a control rule of the control rule database 103, the home gateway 2 may be caused to set a simplified rule when there are two or more unmatched conditions out of the set conditions, that is, when the number of matched conditions satisfies a number prescribed in advance.

### Second embodiment

In the second embodiment, a case in which a priority is set in a control rule database 103 in the management center 1 will be described. The configuration of the second embodiment is similar to that of the first embodiment except for the configuration of the remote access system (see FIG. 1); the configuration of the home gateway 2 (see FIG. 3); and the control rule database 103 in the management center 1 (see FIG. 2) are similar to those in the first embodiment.

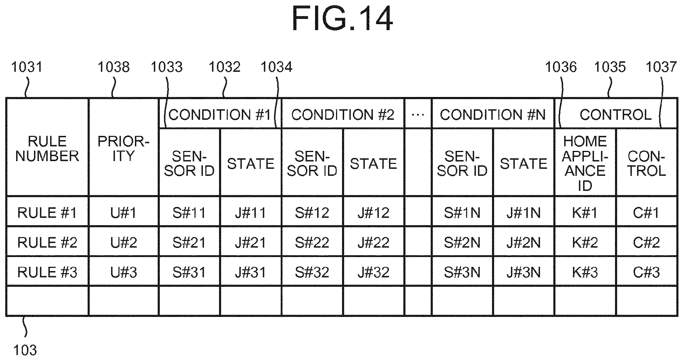

FIG. 14 is a diagram illustrating an exemplary configuration of the control rule database 103 implemented in the management center 1 according to the second embodiment. The control rule database 103 is defined as a set of a plurality of control rule entries. This is a database in which each rule entry includes: the items of a rule number 1031 being identification information of a control rule; a plurality of conditions 1032 that represent control conditions of the rule; and items of control 1035 that prescribes an action to be performed when the conditions are satisfied. Each of the conditions 1032 includes a sensor ID 1033 that designates a sensor in the home; and a state 1034 that represents the state of the sensor designated by the sensor ID 1033. The control 1035 includes a home appliance ID 1036 that identifies a home appliance on which control is performed when all the conditions set in the conditions 1032 for an identical rule number are satisfied; and control 1037 that is to be performed on the home appliance identified by the home appliance ID 1036. Additionally, a priority 1038 is set in the second embodiment. The priority 1038 is the information that indicates a processing priority for a relevant rule.

Setting a priority in the control rule database 103 in this manner allows the home appliance automatic control unit 102 in the management center 1 to determine whether to set a simplified rule in the home gateway 2 by using the priority set in the control rule database 103. This enables the management center 1 to determine that, for example, the home gateway 2 should control a home appliance only in the case of control with a high priority; and that the management center 1 should control a home appliance as before in the case of control with a low priority and thereby reduction in load to the home gateway 2 can be achieved.

### Industrial Applicability

As described above, the gateway according to the present invention is useful for a device connected to a public network and a home network, and particularly suitable to control, via a public network, an appliance connected to a home network.

### Reference Signs List

1 management center, 2 home gateway, 3,4 sensor, 5 home appliance, 10 public network, 11 home network, 101 public network connection I/F, 102 home appliance automatic control unit, 103 control rule database, 104 sensor state database, 105 home appliance state database, 201 public network connection I/F, 202 home network connection I/F, 203 management center coordination unit, 204 simplified rule database, 205 home appliance control unit, 206 sensor information collection unit, 207 sensor database, 208 home appliance information collection unit, 209 home appliance database.

## Claims

1. A gateway (2) in a remote access system that includes:
the gateway (2) that connects a public network (10) and a home network (11); and
a management center (1) that controls, via the public network (10), an appliance (5) connected to the home network (11), the gateway (2) comprising:
a sensor information collection unit (206) that collects state information of a sensor (3,4) connected to the home network (11); **characterized by**
a management center coordination unit (203) that:
transfers the state information to the management center (1);
and obtains simplified rule information from the management center (1), the simplified rule information being a part of a control rule that is defined in the management center (1) and includes a plurality of conditions to control the appliance;
a simplified rule database (204) that manages the simplified rule information; and
an appliance control unit (205) that controls the appliance (5) on a basis of the simplified rule information and the state information, wherein
the gateway (2) receives authority to control the appliance (5) by obtaining the simplified rule information from the management center (1),
wherein a simplified rule is a part of the control rule where at least one of the plurality of conditions of the control rule is determined to match data in a sensor state database (104) of the management center (1).

2. The gateway (2) according to claim 1, wherein the appliance control unit (205) compares the simplified rule information with the state information and, when the state information satisfies a condition set in the simplified rule information, controls the appliance (5).

3. A management center (1) in a remote access system, the remote access system comprising:
a gateway (2) that connects a public network (10) and a home network (11); and
the management center (1) that controls, via the public network (10), an appliance (5) connected to the home network (11), **characterized by** the management center (1) comprising:
a control rule database (103) that defines a control rule including a plurality of conditions to control the appliance (5);
a sensor state database (104) that manages state information of a sensor (3,4) connected to the home network (11); and
an appliance automatic control unit (102) that controls the appliance (5) on a basis of the control rule, and causes the gateway (2) to set simplified rule information that is a part of the control rule on a basis of the control rule and the state information and delegates authority to control the appliance (5) to the gateway (2), wherein a simplified rule is a part of the control rule where at least one of the plurality of conditions of the control rule is determined to match data in the sensor state database (104) of the management center (1).

4. The management center (1) according to claim 3, wherein the appliance automatic control unit (102) compares the control rule to the state information, and causes the gateway (2) to set the simplified rule information that is a part of the control rule when the state information satisfies a condition defined in the control rule and the number of conditions satisfied is a number prescribed in advance and delegates the authority to control the appliance (5) to the gateway (2).

5. The management center (1) according to claim 3 or 4, wherein
the control rule database (103) defines a plurality of control rules and sets priority information for each control rule, and
the appliance automatic control unit (102) determines whether to cause the gateway (2) to set the simplified rule information that is a part of the control rule and delegate the authority to control the appliance (5) to the gateway (2) by using the priority information.

6. A remote access system, comprising:
a gateway (2) that connects a public network (10) and a home network (11); and
a management center (1) that controls, via the public network (10), an appliance (5) connected to the home network (11), **characterized by** the gateway (2) comprising:
a sensor information collection unit (206) that collects state information of a sensor (3,4) connected to the home network (11);
a management center coordination unit (203) that transfers the state information to the management center (1) and obtains simplified rule information from the management center (1), the simplified rule information being a part of a control rule that is defined in the management center (1) and includes a plurality of conditions to control the appliance (5);
a simplified rule database (204) that manages the simplified rule information; and
an appliance control unit (205) that controls the appliance (5) on a basis of the simplified rule information and the state information,
the management center (1) comprising:
a control rule database (103) that defines the control rule including a condition to control the appliance (5);
a sensor state database (104) that manages the state information of the sensor (3,4) connected to the home network (11); and
an appliance automatic control unit (102) that controls the appliance (5) on a basis of the control rule, and causes the gateway (2) to set the simplified rule information that is a part of the control rule on a basis of the control rule and the state information and delegates authority to control the appliance (5) to the gateway (2), wherein a simplified rule is a part of the control rule where at least one of the plurality of conditions of the control rule is determined to match data in the sensor state database (104) of the management center (1).

7. A remote access method in a system comprising: a gateway (2) that connects a public network (10) and a home network (11) ; and a management center (1) that controls, via the public network (10), an appliance (5) connected to the home network (11), **characterized by** the method comprising:
collecting a sensor information in which the gateway (2) collects state information of a sensor (3,4) connected to the home network (11);
coordinating a management center (1) in which the gateway (2) transfers the state information to the management center (1) and obtains simplified rule information from the management center (1), the simplified rule information being a part of a control rule that is defined in the management center (1) and includes a plurality of conditions to control the appliance (5);
managing a simplified rule information in which the gateway (2) manages the simplified rule information;
controlling an appliance (5) in which the gateway (2) controls the appliance (5) on a basis of the simplified rule information and the state information;
defining a control rule in which the management center (1) defines the control rule including a condition to control the appliance (5);
managing a sensor state information in which the management center (1) manages the state information of the sensor (3,4) connected to the home network (11); and
controlling an appliance (5) automatically in which the management center (1) controls the appliance (5) on a basis of the control rule, and causes the gateway (2) to set the simplified rule information that is a part of the control rule on a basis of the control rule and the state information and delegates authority to control the appliance (5) to the gateway,
wherein a simplified rule is a part of the control rule where at least one of the plurality of conditions of the control rule is determined to match data in the sensor state database (104) of the management center (1).

## Patentansprüche

1. Gateway (2) in einem Fernzugriffssystem, das umfasst:
das Gateway (2), das ein öffentliches Netzwerk (10) und ein Heimnetzwerk (11) verbindet; und
ein Verwaltungszentrum (1), das über das öffentliche Netzwerk (10) ein mit dem Heimnetzwerk (11) verbundenes Gerät (5) steuert, wobei das Gateway (2) umfasst:
eine Sensorinformationssammeleinheit (206), die Zustandsinformationen eines mit dem Heimnetzwerk (11) verbundenen Sensors (3, 4) sammelt, **gekennzeichnet durch**
eine Verwaltungszentrumkoordinationseinheit (203), die:
die Zustandsinformationen an das Verwaltungszentrum (1) übermittelt;
und vereinfachte Regelinformationen vom Verwaltungszentrum (1) erhält, wobei die vereinfachten Regelinformationen ein Teil von einer im Verwaltungszentrum (1) definierten Steuerregel sind und eine Vielzahl von Bedingungen zum Steuern des Geräts umfassen;
eine vereinfachte Regeldatenbank (204), die die vereinfachten Regelinformationen verwaltet; und
eine Gerätsteuereinheit (205), die das Gerät (5) auf einer Grundlage der vereinfachten Regelinformation und der Zustandsinformation steuert, wobei
das Gateway (2) Autorisierung empfängt, das Gerät (5) durch Erhalten der vereinfachten Regelinformation vom Verwaltungszentrum (1) zu steuern,
wobei eine vereinfachte Regel ein Teil der Steuerregel ist, in der zumindest für eine von der Vielzahl von Bedingungen der Steuerregel bestimmt ist, mit Daten in einer Sensorzustandsdatenbank (104) des Verwaltungszentrums (1) übereinzustimmen.

2. Gateway (2) nach Anspruch 1, wobei die Gerätsteuereinheit (205) die vereinfachten Regelinformationen mit den Zustandsinformationen vergleicht, und, wenn die Zustandsinformation eine in den vereinfachten Regelinformationen festgelegte Bedingung erfüllt, das Gerät (5) steuert.

3. Verwaltungszentrum (1) in einem Fernzugriffssystem, wobei das Fernzugriffssystem umfasst:
ein Gateway (2), das ein öffentliches Netzwerk (10) und ein Heimnetzwerk (11) verbindet; und
ein Verwaltungszentrum (1), das über das öffentliche Netzwerk (10) ein mit dem Heimnetzwerk (11) verbundenes Gerät (5) steuert, **dadurch gekennzeichnet, dass** das Verwaltungszentrum (1) umfasst:
eine Steuerregeldatenbank (103), die eine Steuerregel, umfassend eine Vielzahl von Bedingungen zum Steuern des Geräts (5), definiert;
eine Sensorzustandsdatenbank (104), die Zustandsinformation eines mit dem Heimnetzwerk (11) verbundenen Sensors (3, 4) verwaltet; und
eine automatische Gerätsteuereinheit (102), die das Gerät (5) steuert auf einer Grundlage der Steuerregel, und das Gateway (2) veranlasst, vereinfachte Regelinformationen, die ein Teil der Steuerregel sind, auf einer Grundlage der Steuerregel und der Zustandsinformation festzulegen und Autorisierung zum Steuern des Geräts (5) an das Gateway (2) delegiert,
wobei eine vereinfachte Regel ein Teil der Steuerregel ist, in der für zumindest eine von der Vielzahl von Bedingungen der Steuerregel bestimmt ist, mit Daten in der Sensorzustandsdatenbank (104) des Verwaltungszentrums (1) übereinzustimmen.

4. Verwaltungszentrum (1) nach Anspruch 3, wobei die automatische Gerätsteuereinheit (102) die Steuerregel mit den Zustandsinformationen vergleicht, und das Gateway (2) veranlasst, die vereinfachten Regelinformationen, die ein Teil der Steuerregel sind, festzulegen, wenn die Zustandsinformationen einer in der Steuerregel definierten Bedingung genügen und die Anzahl von erfüllten Bedingungen eine Anzahl ist, die im Voraus vorgeschrieben ist, und die Autorisierung zum Steuern des Geräts (5) an das Gateway (2) delegiert.

5. Verwaltungszentrum (1) nach Anspruch 3 oder 4, wobei
die Steuerregeldatenbank (103) eine Vielzahl von Steuerregeln definiert und Prioritätsinformation für jede Steuerregel festlegt, und
die automatische Gerätsteuereinheit (102) bestimmt, ob das Gateway (2) zu veranlassen ist, die vereinfachte Regelinformation, die ein Teil der Steuerregel ist, festzulegen und die Autorisierung zum Steuern des Geräts (5) an das Gateway (2) mittels der Prioritätsinformation zu delegieren.

6. Fernzugriffssystem, umfassend:
ein Gateway (2), das ein öffentliches Netzwerk (10) und ein Heimnetzwerk (11) verbindet; und
ein Verwaltungszentrum (1), das über das öffentliche Netzwerk (10) ein mit dem Heimnetzwerk (11) verbundenes Gerät (5) steuert, **dadurch gekennzeichnet, dass** das Gateway (2) umfasst:
eine Sensorinformationssammeleinheit (206), die Zustandsinformationen eines mit dem Heimnetzwerk (11) verbundenen Sensors (3, 4) sammelt;
eine Verwaltungszentrumkoordinationseinheit (203), die die Zustandsinformationen an das Verwaltungszentrum (1) übermittelt und vereinfachte Regelinformationen vom Verwaltungszentrum (1) erhält, wobei die vereinfachten Regelinformationen ein Teil von einer im Verwaltungszentrum (1) definierten Steuerregel sind und eine Vielzahl von Bedingungen zum Steuern des Geräts (5) umfassen;
eine vereinfachte Regeldatenbank (204), die die vereinfachten Regelinformationen verwaltet; und
eine Gerätsteuereinheit (205), die das Gerät (5) auf einer Grundlage der vereinfachten Regelinformation und der Zustandsinformation steuert,
wobei das Verwaltungszentrum (1) umfasst:
eine Steuerregeldatenbank (103), die die Steuerregel, umfassend eine Bedingung zum Steuern des Geräts (5), definiert;
eine Sensorzustandsdatenbank (104), die die Zustandsinformationen des mit dem Heimnetzwerk (11) verbundenen Sensors (3, 4) verwaltet; und
eine automatische Gerätsteuereinheit (102), die das Gerät (5) steuert auf einer Grundlage der Steuerregel, und das Gateway (2) veranlasst, die vereinfachte Regelinformation, die ein Teil der Steuerregel ist, festzulegen auf einer Grundlage der Steuerregel und der Zustandsinformation und Autorisierung zum Steuern des Geräts (5) an das Gateway (2) delegiert, wobei eine vereinfachte Regel ein Teil der Steuerregel ist, in der für zumindest eine von der Vielzahl von Bedingungen der Steuerregel bestimmt ist, mit Daten in der Sensorzustandsdatenbank (104) des Verwaltungszentrums (1) übereinzustimmen.

7. Fernzugriffsverfahren in einem System, umfassend: ein Gateway (2), das ein öffentliches Netzwerk (10) und ein Heimnetzwerk (11) verbindet; und ein Verwaltungszentrum (1), das über das öffentliche Netzwerk (10) ein mit dem Heimnetzwerk (11) verbundenes Gerät (5) steuert, **dadurch gekennzeichnet, dass** das Verfahren umfasst:
Sammeln einer Sensorinformation, wobei das Gateway (2) Zustandsinformationen eines mit dem Heimnetzwerk (11) verbundenen Sensors (3, 4) sammelt;
Koordinieren eines Verwaltungszentrums (1), wobei das Gateway (2) die Zustandsinformationen an das Verwaltungszentrum (1) übermittelt und vereinfachte Regelinformationen vom Verwaltungszentrum (1) erhält, wobei die vereinfachten Regelinformationen ein Teil von einer im Verwaltungszentrum (1) definierten Steuerregel sind und eine Vielzahl von Bedingungen zum Steuern des Geräts (5) umfassen;
Verwalten einer vereinfachten Regelinformation, wobei das Gateway (2) die vereinfachte Regelinformation verwaltet;
Steuern eines Geräts (5), wobei das Gateway (2) das Gerät (5) steuert auf einer Grundlage der vereinfachten Regelinformation und der Zustandsinformationen;
Definieren einer Steuerregel, wobei das Verwaltungszentrum (1) die Steuerregel, umfassend eine Bedingung zum Steuern des Geräts (5), definiert,
Verwalten einer Sensorzustandsinformation, wobei das Verwaltungszentrum (2) die Zustandsinformationen des mit dem Heimnetzwerk (11) verbundenen Sensors (3, 4) verwaltet; und
automatisches Steuern eines Geräts (5), wobei das Verwaltungszentrum (1) das Gerät (5) steuert auf einer Grundlage der Steuerregel, und das Gateway (3) veranlasst, die vereinfachte Regelinformation, die ein Teil der Steuerregel ist, festzulegen auf einer Grundlage der Steuerregel und der Zustandsinformationen und Autorisierung zum Steuern des Geräts (5) an das Gateway delegiert,
wobei eine vereinfachte Regel ein Teil der Steuerregel ist, in der für zumindest eine von der Vielzahl von Bedingungen der Steuerregel bestimmt ist, mit Daten in der Sensorzustandsdatenbank (104) des Verwaltungszentrums (1) übereinzustimmen.

## Revendications

1. Passerelle (2) dans un système d'accès à distance qui comprend :
la passerelle (2) qui connecte un réseau public (10) et un réseau domestique (11) ; et
un centre de gestion (1) qui commande, par l'intermédiaire du réseau public (10), un appareil (5) connecté au réseau domestique (11), la passerelle (2) comprenant :
une unité collecte d'informations de détecteur (206) qui collecte des informations d'état d'un détecteur (3, 4) connecté au réseau domestique (11) ;
**caractérisée par** :
une unité coordination de centre de gestion (203) qui :
transfère les informations d'état au centre de gestion (1) ;
et obtient des informations de règle simplifiée en provenance du centre de gestion (1), les informations de règle simplifiée étant une partie d'une règle de commande qui est définie dans le centre de gestion (1), et qui comprend une pluralité de conditions destinées à commander l'appareil ;
une base de données de règles simplifiées (204) qui gère les informations de règle simplifiée ; et
une unité commande d'appareil (205) qui commande l'appareil (5) sur la base des informations de règle simplifiée et des informations d'état, dans laquelle :
la passerelle (2) reçoit l'autorisation de commander l'appareil (5) en obtenant les informations de règle simplifiée en provenance du centre de gestion (1) ;
dans laquelle une règle simplifiée est une partie de la règle de commande où l'une au moins de la pluralité de conditions de la règle de commande, est déterminée de façon à correspondre à des données dans une base de données d'états de détecteur (104) du centre de gestion (1).

2. Passerelle (2) selon la revendication 1, dans laquelle :
l'unité commande d'appareil (205) compare les informations de règle simplifiée et les informations d'état et, lorsque les informations d'état satisfont à une condition fixée dans les informations de règle simplifiée, commande l'appareil (5).

3. Centre de gestion (1) dans un système d'accès à distance, le système d'accès à distance comprenant :
une passerelle (2) qui connecte un réseau public (10) et un réseau domestique (11) ; et
le centre de gestion (1) qui commande, par l'intermédiaire du réseau public (10), un appareil (5) connecté au réseau domestique (11), **caractérisé par le fait que** le centre de gestion (1) comprend :
une base de données de règles de commande (103) qui définit une règle de commande qui comprend une pluralité de conditions destinées à commander l'appareil (5) ;
une base de données d'états de détecteur (104) qui gère les informations d'état d'un détecteur (3, 4) connecté au réseau domestique (11) ; et
une unité commande automatique d'appareil (102) qui commande l'appareil (5) sur la base de la règle de commande, et fait fixer par la passerelle (2) des informations de règle simplifiée qui sont une partie de la règle de commande, sur la base de la règle de commande et des informations d'état, et délègue à la passerelle (2) l'autorisation de commander l'appareil (5), dans lequel une règle simplifiée est une partie de la règle de commande où l'une au moins de la pluralité de conditions de la règle de commande, est déterminée de façon à correspondre à des données dans la base de données d'états de détecteur (104) du centre de gestion (1).

4. Centre de gestion (1) selon la revendication 3, dans lequel :
l'unité commande automatique d'appareil (102) compare la règle de commande et les informations d'état, et fait fixer par la passerelle (2) les informations de règle simplifiée qui sont une partie de la règle de commande, lorsque les informations d'état satisfont à une condition définie dans la règle de commande, et lorsque le nombre de conditions satisfaites est un nombre prescrit à l'avance, et délègue à la passerelle (2) l'autorisation de commander l'appareil (5).

5. Centre de gestion (1) selon la revendication 3 ou la revendication 4, dans lequel :
la base de données de règles de commande (103) définit une pluralité de règles de commande, et fixe les informations de priorité de chaque règle de commande ; et
l'unité commande automatique d'appareil (102) détermine s'il convient de faire fixer par la passerelle (2) les informations de règle simplifiée qui sont une partie de la règle de commande, et de déléguer à la passerelle (2) l'autorisation de commander l'appareil (5), à l'aide des informations de priorité.

6. Système d'accès à distance, comprenant :
une passerelle (2) qui connecte un réseau public (10) et un réseau domestique (11) ; et
un centre de gestion (1) qui commande, par l'intermédiaire du réseau public (10), un appareil (5) connecté au réseau domestique (11), **caractérisé par le fait que** la passerelle (2) comprend :
une unité collecte d'informations de détecteur (206) qui collecte des informations d'état d'un détecteur (3, 4) connecté au réseau domestique (11) ;
une unité coordination de centre de gestion (203) qui transfère les informations d'état au centre de gestion (1), et obtient des informations de règle simplifiée en provenance du centre de gestion (1), les informations de règle simplifiée étant une partie d'une règle de commande qui est définie dans le centre de gestion (1), et qui comprend une pluralité de conditions destinées à commander l'appareil (5) ;
une base de données de règles simplifiées (204) qui gère les informations de règle simplifiée ; et
une unité commande d'appareil (205) qui commande l'appareil (5) sur la base des informations de règle simplifiée et des informations d'état ;
le centre de gestion (1) comprenant :
une base de données de règles de commande (103) qui définit la règle de commande qui comprend une condition destinée à commander l'appareil (5) ;
une base de données d'états de détecteur (104) qui gère les informations d'état du détecteur (3, 4) connecté au réseau domestique (11) ; et
une unité commande automatique d'appareil (102) qui commande l'appareil (5) sur la base de la règle de commande, et fait fixer par la passerelle (2) les informations de règle simplifiée qui sont une partie de la règle de commande, sur la base de la règle de commande et des informations d'état, et délègue à la passerelle (2) l'autorisation de commander l'appareil (5), dans lequel une règle simplifiée est une partie de la règle de commande où l'une au moins de la pluralité de conditions de la règle de commande, est déterminée de façon à correspondre à des données dans la base de données d'états de détecteur (104) du centre de gestion (1).

7. Procédé d'accès à distance dans un système qui comprend :
une passerelle (2) qui connecte un réseau public (10) et un réseau domestique (11) ; et
un centre de gestion (1) qui commande, par l'intermédiaire du réseau public (10), un appareil (5) connecté au réseau domestique (11), **caractérisé par le fait que** le procédé comprend les étapes consistant à :
collecter des informations de détecteur, dans lequel la passerelle (2) collecte des informations d'état d'un détecteur (3, 4) connecté au réseau domestique (11) ;
coordonner un centre de gestion (1) dans lequel la passerelle (2) transfère les informations d'état au centre de gestion (1), et obtient des informations de règle simplifiée en provenance du centre de gestion (1), les informations de règle simplifiée étant une partie d'une règle de commande qui est définie dans le centre de gestion (1), et qui comprend une pluralité de conditions destinées à commander l'appareil (5) ;
gérer des informations de règle simplifiée, dans lequel la passerelle (2) gère les informations de règle simplifiée ;
commander un appareil (5), dans lequel la passerelle (2) commande l'appareil (5) sur la base des informations de règle simplifiée et des informations d'état ;
définir une règle de commande, dans lequel le centre de gestion (1) définit la règle de commande qui comprend une condition destinée à commander l'appareil (5) ;
gérer des informations d'état de détecteur, dans lequel le centre de gestion (1) gère les informations d'état du détecteur (3, 4) connecté au réseau domestique (11) ; et
commander un appareil (5) de manière automatique, dans lequel le centre de gestion (1) commande l'appareil (5) sur la base de la règle de commande, et fait fixer par la passerelle (2) les informations de règle simplifiée qui sont une partie de la règle de commande, sur la base de la règle de commande et des informations d'état, et délègue à la passerelle l'autorisation de commander l'appareil (5) ;
dans lequel une règle simplifiée est une partie de la règle de commande où l'une au moins de la pluralité de conditions de la règle de commande, est déterminée de façon à correspondre à des données dans la base de données d'états de détecteur (104) du centre de gestion (1).
